# EUROPEAN PATENT SPECIFICATION

(11) **EP 3 826 846 B1**
(45) Date of publication and mention of the grant of the patent: **14.02.2024**
(21) Application number: 19765555.8
(22) Date of filing: 23.07.2019
(51) Int. Cl.: B32B 27/10, B32B 27/32

(54) **CARDBOARD CONTAINER LAMINATED WITH A RIGID THERMOPLASTIC FILM**
MIT EINER STARREN THERMOPLASTISCHEN FOLIE LAMINIERTER KARTONBEHÄLTER
RÉCIPIENT EN CARTON STRATIFIÉ AVEC UN FILM THERMOPLASTIQUE RIGIDE

(30) Priority: 24.07.2018 IT 201800007476
(43) Date of publication of application: 02.06.2021
(73) Proprietor: Chima S.r.l., 23900 Lecco LC (IT)
(72) Inventor: CHIAPPA, Andrea, 23900 Lecco LC (IT)
(74) Representative: Perani & Partners S.p.A.
(86) International application number: PCT/IB2019/056286
(87) International publication number: WO 2020/021449

(56) References cited:
- JP-A- 2000 153 830
- JP-A- 2001 192 014
- US-A1- 2012 193 402

## Description

### FIELD OF THE INVENTION

The present invention relates to a laminated cardboard container, preferably for use in food packaging.

### BACKGROUND OF THE INVENTION

In certain known cardboard containers for food preservation, the inner wall of the package is laminated with a plastic film to seal the cardboard, which would be otherwise water permeable and sensitive to edible oils.

The plastic coating of the inner wall makes the containers suitable for modified-atmosphere packaging, since lamination seals the cardboard from the atmosphere, which is responsible for food degradation and rancidity over the long term.

EP2441697 discloses a method of making a laminated cardboard container, suitable for modified-atmosphere packaging. A blank for a tray is folded inside a lower mold and a plastic film is heated by contact with a heated upper mold. The upper mold is essentially flat and has air-intake openings on its inner surface, for the plastic film to be adhered to the heated upper mold.

The heat-softened plastic film is laminated on the inner wall of the cardboard container by pressing the upper mold on the lower bell with the folded tray laying thereon.

The upper mold is moved toward the plastic film, hence toward the cardboard tray, by vacuum, i.e. by drawing in the air between the upper bell and the lower bell from the bottom.

For this purpose, the cardboard tray has holes formed at the bottom corners of container, allowing air to escape during vacuum lamination.

Alternately, plastic coating may be obtained by simultaneously generating a positive pressure above the plastic film by blowing air under pressure, and a low pressure between the film and the container by drawing in the air between the two molds.

The method as described in the prior art document EP2441697 requires the heated plastic film to be pressed against the cardboard tray using the upper mold, regardless of whether the movement of the upper mold is caused by low pressure alone or a combination of vacuum and high pressure.

Once the laminated containers of the above type are filled with the food product to be packaged, they are sealed by a peelable covering film, which is sealed or bonded to the flange of the plastic-coated tray.

The plastic films for use in lamination of existing cardboard containers are flexible, like in the case of the container obtained with the method as disclosed in the above-mentioned patent EP2441697.

These flexible films do not contribute to the final rigidity of the container, which is substantially provided by the cardboard container, but impart barrier properties to the paper tray which does not exhibit good gas- and liquid-resistance properties itself.

Furthermore, the plastic films that are currently used for lamination of cardboard containers are composite films comprising at least one layer of a binding agent (adhesives), which can cause the plastic film to adhere to the cardboard tray using heat-sealing systems.

The use of binding agents, which hinder film recycling, also has an effect on recyclability of the inner container, as it prevents appropriate separation of the plastic part from the and paper part.

Therefore, cardboard containers laminated with flexible plastic films have the following drawbacks:
- they are not suitable for use in production lines with automatic unstacking systems: the container is too flexible to have a flat and stable flange, that would provide a constant distance between the stacked pieces, rendering difficult their separation;
- when the tray is opened, the inner film, laminated on the cardboard tray, is not easily detached from the outer cardboard, making difficult the delamination between the cardboard container and the plastic film of the container, thereby hindering proper separation of the constituent materials for recycling purposes.

JP2000153830 relates to a container comprising a corrugated cardboard blank with a bottom wall, and side walls; a cardboard frame flange; and an internal protective film that adheres to the bottom, to the side walls and to the flange. The flange is integrated into the blank, without overlapping surfaces. Thanks to the use of corrugated cardboard, the container has good insulating properties that allow it to be handled easily, even with hot contents. The protective film can be made of a PET-A/EVOH/PE multilayer (para. [0025]) and has a thickness of between 30 and 250 µm (para. [0028]). The paperboard that can be used to make the container has a grammage of 150 to 600 g/m2 (para. [0026]).

JP2001192014 discloses a tray-shaped paper composite container comprising an outer vessel having a flange made by press-molding a paper board material, and formed with a plurality of fine holes on a base; an inner vessel made by thermo-forming a thermoplastic resin sheet having gas barrier properties, wherein the inner vessel is inserted inside the outer vessel and an internal surface of the outer vessel and an external surface of the inner vessel are stuck to each other.

### SUMMARY OF INVENTION

Now, the Applicant has developed a cardboard container, laminated with a rigid plastic film, that can obviate the drawbacks of the prior art.

In particular, with the container of the invention:
- the trays have an improved bearing structure, with a flat and stable collar; this provides a consistent distance between the stacked trays, thereby facilitating the use of automatic unstacking systems in the production line;
- the use of a rigid material for lamination of the cardboard container ensures easier peeling of the upper covering film, without causing deformation or delamination of the inner film from the cardboard.

The present invention relates to a food-grade container 1 comprising
- a cardboard container 10 having an opening 11, a bottom 12, side walls 13 which surround the bottom 12 and terminate at the top with a flange 14 that delimits the opening 11 of the container,
- a thermoplastic film 20, which is coupled to the container 10 at the bottom 12, at the side walls 13 and at the flange 14 by means of heat transfer,

said thermoplastic film 20 comprising at least one layer of polyethylene terephthalate (PET) and having a thickness ≥ 150 µm,
wherein the basis weight of the cardboard of the container 10 and the thickness of the thermoplastic film 20 are in a ratio from 2:1 to 1:3 (gr/m²:µm),
characterized in that said thermoplastic film comprises at least one layer of amorphous terephthalate polyethylene (A-PET), and a layer of polyethylene terephthalate glycol (PETG) and wherein said PETG layer is the layer adjacent to the cardboard container (10).

### DESCRIPTION OF THE FIGURES

Figure 1: Perspective view of the container 1.
Figure 2: Top view of the blank 100.
Figure 3: Top view of the container 1.

### DETAILED DESCRIPTION OF THE INVENTION

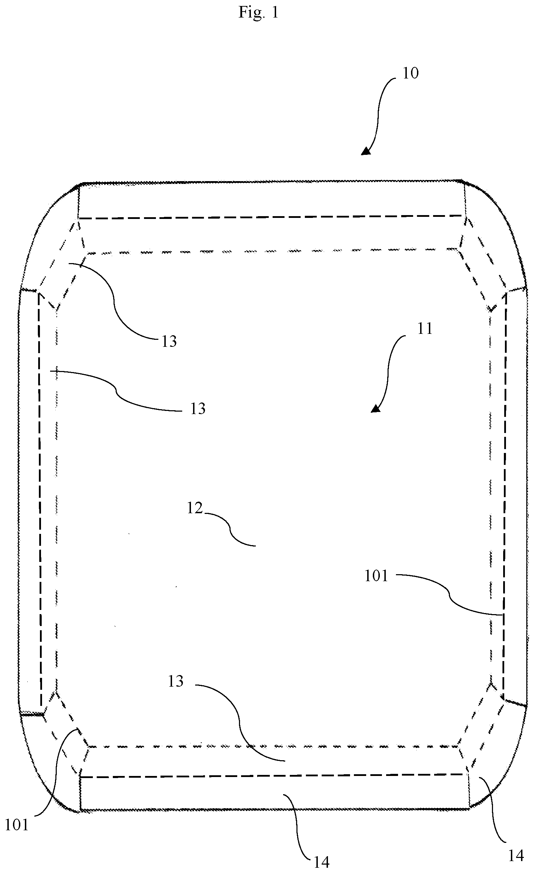

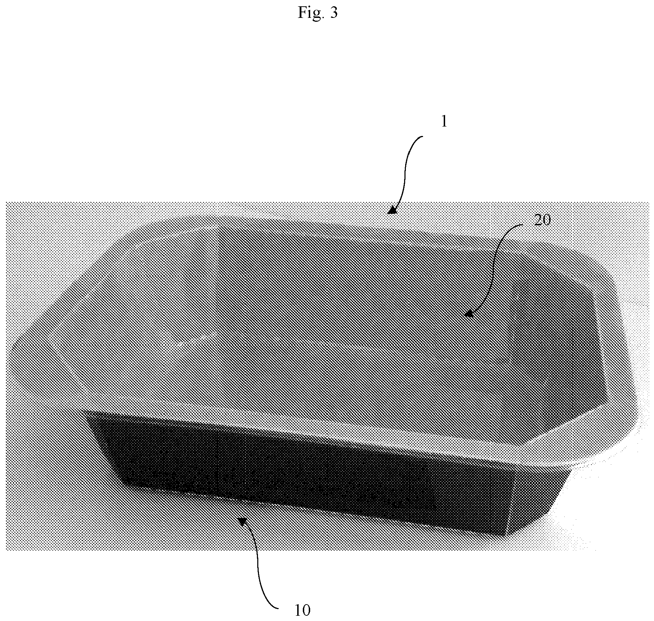

Figure 1 schematically shows a perspective view of a food-grade container 1 of the present invention. Figure 3 depicts a top view of the container 1.

The container 1 comprises a cardboard container 10 and a rigid thermoplastic film 20.

The container 10 particularly comprises a bottom 12, side walls 13 which surround the bottom 12 and terminate at the top with a flange 14 that delimits the opening 11 of the container 10.

The bottom 12 and the side walls 13 have inner surfaces that define an inner surface of the container 10.

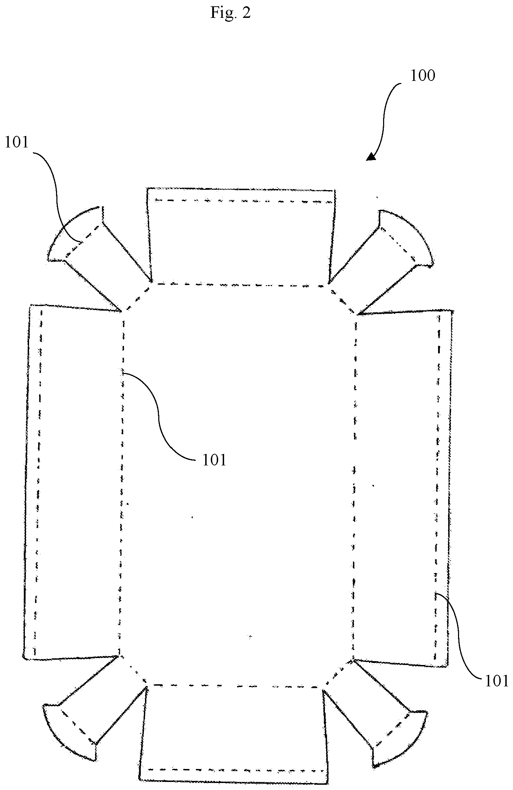

The container 10 is preferably obtained from a blank 100, as schematically shown in Figure 2.

More preferably, the container 10 is obtained from a single blank100.

The blank 100 preferably has folding cutouts 101 at the edges, which assist folding of the cardboard container 10 into a food-grade container 1.

The container 10 is preferably obtained by folding the blank 100 with adjacent edges of the side walls 13 to form a continuous angular surface.

The blank from which the container 10 is obtained may be pressed from both sides, so that one pressed side forms the inner surface of the container 10.

The cardboard that is used for the purposes of the present invention may have any type of cardboard composition that is known in the art to be used for food-grade packaging, and that meets the requirements of the food industry, as well as those imposed for modified-atmosphere packaging.

Preferably, the cardboard for use in the present invention is a waterproofed cardboard.

More preferably, the cardboard for use in the formation of the container 10 has a basis weight ranging from 50 to 450 gr/m².

More preferably, the cardboard for use in the formation of the container 10 has a thickness ranging from 200 to 700 µm.

The thermoplastic film 20 comprises at least one layer of polyethylene terephthalate (PET) and has a thickness ≥ 150 µm.

The advantage of using a thermoplastic film comprising PET is the possibility of obtaining rigid films even with small thicknesses, thereby reducing the plastic part of the container. The rigidity, i.e. the deformation resistance provided by the plastic film, also imparts a structure to the cardboard container, which affords easier handling during production and distribution.

It shall be noted that, in a preferred embodiment, the thermoplastic film 20 has a thickness that ranges from 150 to 450 µm.

The thermoplastic film 20 is coupled to the container 10 at the bottom 12, at the side walls 13 and at the flange 14 of such container.

The thermoplastic film 20 is coupled to the container 10 by means of heat transfer.

More preferably, the thermoplastic film 20 is coupled by thermal lamination, which is intended as a combination of two or more flat paper, plastic or aluminum materials by adhesion to obtain multilayer structures that combine the properties of each constituent material.

Thermal lamination (or hot lamination) is carried out using thermoplastic materials that are heated and melted to cause adhesion of two superimposed layers.

The thermoplastic film 20 is preferably adhesive, with the term adhesive being intended to designate a film which has sealing properties at the heating temperatures of the film, without requiring binding agents for retention or pressure molds for adhesion to the relevant surface.

In other words, the thermoplastic film 20 is preferably free of binding agents for retention. More preferably the container 1 of the present invention contains no bonding agent (adhesive).

Still more preferably, the thermoplastic film 20 may be advantageously separated from the cardboard container 10 for recycling purposes.

In a preferred embodiment, the thermoplastic film 20 is a multilayer plastic film.

This multilayer plastic film comprises at least one upper layer and one lower layer.

During lamination, such lower layer faces the inner surface of the container 10.

As previously commented, the thermoplastic film 20 comprises at least one layer of amorphous polyethylene terephthalate (A-PET), and one layer of polyethylene terephthalate glycol (PETG), wherein such PETG layer is the layer adjacent to the cardboard container, i.e. the lower layer.

The use of PET-G, which is a polymer obtained from copolymerization of PET with ethylene glycol, advantageously allows plastic adhesion to cardboard, without using adhesives.

Preferably, the thermoplastic film 20 is a single-material multilayer film comprising layers made of PET and/or PET derivatives.

It shall be noted that, according to a further embodiment, the thermoplastic film 20 comprises a gas barrier layer containing ethinyl vinyl alcohol (EVOH) or polystyrene (PS).

Preferably, the thermoplastic film comprises a heat-resistant layer of polypropylene (PP)

The cardboard of the container 10 and the thermoplastic film 20, of the rigid type, are combined to form the container 1 with the basis weight of the cardboard of the container 10 and the thickness of the thermoplastic film 20 in a ratio from 2:1 to 1:3 (gr/m² µm).

Preferably, the cardboard of the container 10 and the thermoplastic film 20, of the rigid type, are combined to form the container 1 with the basis weight of the cardboard of the container 10 and the thickness the thermoplastic film 20 in a 1:1 ratio (gr/m² µm). It shall be noted that, in a preferred embodiment, the container 1 has an overall thickness that ranges from 200 to 900 µm.

The bottom 12, the side walls 13 and the flange 14 of the container 10 are preferably maintained in the shape of the container 1 by hot lamination of the thermoplastic film 9 on the inner surface of the container 10.

The container 1 is suitable for food packaging.

Once the container 1 has been filled, it may be sealed with a preferably peelable closing plastic film, which allows modified-atmosphere food packaging.

The composition of the closing plastic film depends on the composition of the thermoplastic film 20 laminated on the container 10.

The container 1 of the present invention is preferably obtained with the method as disclosed in EP 3 222 415 A, which comprises the steps of:
- providing a cardboard container having an opening, a bottom, side walls which surround the bottom and terminate at the top with a flange that delimits the opening of the container,
- providing a lower shell which is specially shaped to receive the container and has air-passage holes,
- providing an upper shell equipped with heating elements,
- providing a plastic film,
- placing the plastic film between the upper shell and the container placed in the lower shell,
- heating the plastic film by means of the heating elements of the upper shell,
- creating a vacuum between the lower shell and the upper shell to cause the plastic film to adhere to the bottom, the side walls and the flange of the container,
wherein the upper shell has a cavity that faces said bottom shell; the step of providing the cardboard container comprises the steps of providing a blank; folding the blank in the lower shell to form the container within the lower shell; and wherein the step of heating said plastic film is carried out by radiation.

As compared with existing containers composed of plastic and cardboard laminates, the container 1 of the invention provides the following benefits:
- Improved peeling between the tray and the top film: the use of a rigid film for hot lamination of the cardboard facilitates separation of the plastic portion from the paper portion, also due to the lack of adhesive materials.
- Unstacking of containers: the containers of the invention are sufficiently rigid to withstand the unstacking forces of automatic tray separation systems in the production lines without deformation.
- Container recycling: the container 10 and the thermoplastic film 20 may be easily separated and recycled separately with paper and plastic, respectively. The use of a single-material thermoplastic film allows recycling of the plastic part of the container, unlike composite films, such as PET+PE, in which the PE component coupled with the PET "pollutes" material, and does not allow easy recycling thereof.

Therefore, the use of a cardboard container laminated with the thermoplastic film allows the thickness of the film to be reduced even to 50% as compared with an all-plastic tray.

### EXAMPLES

Exemplary embodiments of the food-grade container of the present invention are described below by way illustration only and without limitation.

| Height of the container (1) (mm) | Thickness of an all-plastic container having the same height µm | Container of the invention | |
|---|---|---|---|
| | | Thickness of the thermoplastic film (20) (µm) | Basis weight of cardboard of the container (10) (gr/m²) |
| H10 | 300 | 150 | 150 |
| H20 | 300 | 150 | 150 |
| H30 | 400 | 200 | 200 |
| H40 | 500 | 250 | 250 |
| H50 | 500 | 250 | 250 |
| H60 | 600 | 300 | 300 |
| H70 | 700 | 350 | 350 |

## Claims

1. A food container (1) comprising:
- a cardboard container (10) having an opening (11), a bottom (12), side walls (13) which surround the bottom (12) and terminate at the top with a flange (14) that delimits the opening (11) of the container,
- a thermoplastic film (20), which is coupled to the container (10) at the bottom (12), at the side walls (13) and at the flange (14) by means of heat transfer,
said thermoplastic film (20) comprising at least one layer of polyethylene terephthalate (PET) and having a thickness ≥ 150 µm,
wherein the basis weight of the cardboard of the container (10) and the thickness of the thermoplastic film (20) are in a ratio from 2:1 to 1:3 (gr/m²:µm),
**characterized in that** said thermoplastic film comprises at least one layer of amorphous terephthalate polyethylene (A-PET), and a layer of polyethylene terephthalate glycol (PETG) and wherein said PETG layer is the layer adjacent to the cardboard container (10).

2. A container as claimed in claim 1, wherein the basis weight of the cardboard of the container (10) and the thickness of the thermoplastic film (20) are in the ratio 1:1 (gr/m²:µm).

3. A container as claimed in claim 1 or 2, wherein the basis weight of the cardboard of the container (10) ranges from 50 to 450 gr/m².

4. A container as claimed in claim 1 or 2, wherein the thickness of the thermoplastic film (20) ranges from 150 to 450 µm.

5. A container as claimed in any of claims 1 to 4, wherein the total thickness of the container (1) ranges from 200 to 900 µm.

6. A container as claimed in claim 1, wherein said thermoplastic film further comprises a gas barrier layer that contains ethinyl vinyl alcohol (EVOH) or polystyrene (PS).

7. A container as claimed in claim 1, wherein said thermoplastic film further comprises a heat-resistant layer of polypropylene (PP).

8. A container as claimed in any of claims 1 to 7, wherein the cardboard container (10) is composed of a single blank (100).

## Patentansprüche

1. Lebensmittelbehälter (1), umfassend:
- einen Kartonbehälter (10) mit einer Öffnung (11), einem Boden (12), Seitenwänden (13), die den Boden (12) umgeben und oben mit einem Flansch (14) abschließen, der die Öffnung (11) des Behälters begrenzt,
- eine thermoplastische Folie (20), die am Boden (12), an den Seitenwänden (13) und am Flansch (14) durch Wärmeübertragung mit dem Behälter (10) gekoppelt ist,
wobei die thermoplastische Folie (20) mindestens eine Schicht aus Polyethylenterephthalat (PET) umfasst und eine Dicke ≥ 150 µm aufweist,
wobei das Flächengewicht des Kartons des Behälters (10) und die Dicke der thermoplastischen Folie (20) in einem Verhältnis von 2:1 bis 1:3 (g/m²:µm) stehen, **dadurch gekennzeichnet, dass** die thermoplastische Folie mindestens eine Schicht aus amorphem Polyethylenterephthalat (A-PET) und eine Schicht aus Polyethylenterephthalatglykol (PETG) umfasst und wobei die PETG-Schicht die an den Kartonbehälter (10) angrenzende Schicht ist.

2. Behälter nach Anspruch 1, wobei das Flächengewicht des Kartons des Behälters (10) und die Dicke der thermoplastischen Folie (20) im Verhältnis 1:1 (g/m²:µm) stehen.

3. Behälter nach Anspruch 1 oder 2, wobei das Flächengewicht des Kartons des Behälters (10) im Bereich von 50 bis 450 g/m² liegt.

4. Behälter nach Anspruch 1 oder 2, wobei die Dicke der thermoplastischen Folie (20) im Bereich von 150 bis 450 µm liegt.

5. Behälter nach einem der Ansprüche 1 bis 4, wobei die Gesamtdicke des Behälters (1) im Bereich von 200 bis 900 µm liegt.

6. Behälter nach Anspruch 1, wobei die thermoplastische Folie ferner eine Gasbarriereschicht umfasst, die Ethinylvinylalkohol (EVOH) oder Polystyrol (PS) enthält.

7. Behälter nach Anspruch 1, wobei die thermoplastische Folie ferner eine hitzebeständige Schicht aus Polypropylen (PP) umfasst.

8. Behälter nach einem der Ansprüche 1 bis 7, wobei der Kartonbehälter (10) aus einem einzigen Zuschnitt (100) besteht.

## Revendications

1. Récipient alimentaire (1) comprenant :
- un récipient en carton (10) ayant une ouverture (11), un fond (12), des parois latérales (13) qui entourent le fond (12) et se terminent en haut par une bride (14) qui délimite l'ouverture (11) du récipient,
- un film thermoplastique (20), qui est couplé au récipient (10) au niveau du fond (12), des parois latérales (13) et de la bride (14) par transfert de chaleur,
ledit film thermoplastique (20) comprenant au moins une couche de polyéthylène téréphtalate (PET) et ayant une épaisseur ≥ 150 µm,
dans lequel le poids de base du carton du récipient (10) et l'épaisseur du film thermoplastique (20) sont dans un rapport de 2:1 à 1:3 (gr/m²:µm),
**caractérisé en ce que** ledit film thermoplastique comprend au moins une couche de polyéthylène téréphtalate amorphe (A-PET), et une couche de polyéthylène téréphtalate glycol (PETG) et où ladite couche de PETG est la couche adjacente au récipient en carton (10).

2. Récipient selon la revendication 1, dans lequel le poids de base du carton du récipient (10) et l'épaisseur du film thermoplastique (20) sont dans le rapport 1:1 (gr/m²:µm).

3. Récipient selon la revendication 1 ou 2, dans lequel le poids de base du carton du récipient (10) est compris entre 50 et 450 g/m².

4. Récipient selon la revendication 1 ou 2, dans lequel l'épaisseur du film thermoplastique (20) est comprise entre 150 et 450 µm.

5. Récipient selon l'une quelconque des revendications 1 à 4, dans lequel l'épaisseur totale du récipient (1) est comprise entre 200 et 900 µm.

6. Récipient selon la revendication 1, dans lequel ledit film thermoplastique comprend en outre une couche barrière aux gaz qui contient de l'alcool vinylique éthylique (EVOH) ou du polystyrène (PS).

7. Récipient selon la revendication 1, dans lequel ledit film thermoplastique comprend en outre une couche de polypropylène (PP) résistant à la chaleur.

8. Récipient selon l'une quelconque des revendications 1 à 7, dans lequel le récipient en carton (10) est composé d'une seule découpe (100).
